# EUROPÄISCHE PATENTANMELDUNG

(11) **EP 0 961 157 A2**
(43) Veröffentlichungstag der Anmeldung: **01.12.1999**
(21) Anmeldenummer: 99109686.8
(22) Anmeldetag: 17.05.1999
(51) Int. Cl.: G02F 1/15

(54) **Elektrochrome Anordnung mit einer Lithiumniobat-Gegenelektrode**

(30) Priorität: 29.05.1998 DE 19824185
(71) Anmelder: Bayer Aktiengesellschaft, 51368 Leverkusen (DE)
(72) Erfinder: Heuer, Helmut-Werner Dr., 47829 Krefeld (DE); Wehrmann, Rolf Dr., 47800 Krefeld (DE)

(57) **Zusammenfassung**

Elektrochrome Anordnungen, in einem Schichtaufbau, dadurch gekennzeichnet, daß eine Schicht ein elektrisch leitfähiges, elektrochromes Polydioxythiophen und eine weitere Schicht ein Ionenspeicher der Formel (I) ist

LiMeO₃ (I)

worin

Me für ein Metall der V. Nebengruppe des Periodensystems nach Mendelejew steht.

## Beschreibung

Die vorliegende Erfindung betrifft elektrochrome Anordnungen mit steuerbarer Lichtdurchlässigkeit, deren Herstellung sowie deren Verwendung.

Scheiben von Fahrzeugen können bisher nicht in ihrer Transparenz für elektromagnetische Strahlung geregelt werden. Phototrope Gläser finden bisher nur als Brillengläser Verwendung und weisen nur eine relativ geringe Änderung der Transmission auf. Scheiben an Gebäuden werden bisher mit Vorhängen, Fensterläden, Rolläden oder anderen beweglichen mechanischen Elementen verdunkelt. Elektrochrome Vorrichtungen können also auf vielfältige Weise Anwendung finden. So seien zusammenfassend als Beispiele genannt:

### 1. Fahrzeugverglasung (Fensterscheiben oder Autosonnendächer)

Eine elektrochrome Vorrichtung eignet sich als Sonnen- oder Blendschutz in Kraftfahrzeugen. Front-, Seiten- und Heckverglasung oder Glasdächer können einbezogen werden. Der Grad der Abdunkelung kann zonenweise und stufenlos an die Bedürfnisse des Fahrers an den Sonnenstand und an die aktuelle Fahrsituation angepaßt werden. Die Integration in ein rechnergesteuertes Kontrollsystem ist möglich. Eine Kombination von aktivem Element mit einer Verbundglaseinheit ist ebenso möglich, wie das Aufbringen eines Foliensystems auf die Sicherheitsscheiben.

Die Durchlässigkeit der Scheiben kann von Hand oder automatisch gesteuert werden, was zu einem wirksamen Blendschutz bei Nachtfahrten, automatischer Anpassung des Helligkeitspegels bei Ein- und Ausfahrten von Tunneln und Parkhäusern und zum Schutz gegen Einbruch und Diebstahl des geparkten Fahrzeugs durch Verhinderung des Einblicks ins Wageninnere genutzt werden kann. Eine übermäßige Erwärmung des Innenraums im Sommer, insbesondere bei geparktem Fahrzeug, kann verhindert werden (vgl. EP-A 0 272 428).

### 2. Gebäudeverglasung (elektrochromes Fenster)

In Gebäuden eignen sich elektrochrome Anordnungen zur Abdunkelung von Seitenfenstern und Dachfenstern von Gebäuden, Wohnräumen, Arbeitsräumen oder Gewächshäusern als steuerbarer Sonnenschutz (sichtbarer Spektralbereich) und Wärmeschutz (IR-Bereich) sowie als Sichtschutz (sichtbarer Spektralbereich). Zum Schutz vor Einbrüchen können Verglasungen von Bankschaltern oder Schaufenster auf Knopfdruck verdunkelt werden. Glastüren können bei Annäherung von Personen automatisch sichtbar gemacht werden, um Verletzungen zu vermeiden. Durch die Möglichkeit, nahezu alle Farbtöne zu erzeugen, ist auch eine gestalterische Einbeziehung der Verglasung in die Fassade eines Gebäudes möglich. Der Energieverbrauch für die großflächige Steuerung der Fenstertransparenz ist gering, insbesondere wenn der Memory-Effekt des Systems ausgenutzt werden kann und nur in der Umschaltphase Energie verbraucht wird. Eine Kombination mit einer Wärmeschutzverglasung (K-Glas) ist sehr gut geeignet um eine dynamische Kontrolle der Sonneneinstrahlung durch ein Fenster hindurch zu gewährleisten ( 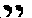 smart window"). Somit kann ein elektrochromes System zur Regulierung und Begrenzung der notwendigen Energie zur Gebäudeklimatisierung beitragen.

Die Spannungsversorgung des Systems kann auch durch Solarmodule erfolgen. Ein lichtempfindlicher Sensor kann den Grad der Sonneneinstrahlung ermitteln und somit den Grad der Lichtdurchläßigkeit steuern.

### 3. Anzeigeelemente

Durch die farblich attraktive Gestaltungsmöglichkeit sowie die großflächige Darstellung beliebiger Konturen, z. B. Buchstaben, Zahlen, Zeichen und Symbole (durch geeignete Strukturierungstechniken herstellbar) ist ein für die Werbung interessantes Medium verfügbar. Dekorative und informative Effekte sind leicht möglich.

Neben der Möglichkeit, das System zwischen Glasscheiben anzuordnen besteht auch die Alternative zwei oder auch nur eine transparente Kunststofffolie als Träger zu verwenden. Dadurch werden plakatähnliche Werbemittel mit veränderbarer Information realisierbar.

Elektrochrome Vorrichtungen können für kleine Anzeigeelemente wie Zifferblätter von Uhren oder Meßinstrumenten, Displays für die unterschiedlichsten Anwendungen und für große Anzeigeelemente wie Verkehrsschilder, Litfaßsäulen, Anzeigen auf Bahnhöfen, Flugplätzen oder bei Parkleitsystemen verwendet werden. Der Einsatz als variables Linienbegrenzungssystems (Spielfeldbegrenzungen etc.) in Sporthallen ist ebenfalls möglich.

Die Verwendung ist generell dort möglich, wo Informationen sichbar gemacht werden sollen.

### 4. Optik

In der Optik ist die Verwendung elektrochromer Systeme sowohl in Kombination mit Gläsern, Linsen und Filter anderen optischer Geräte als auch als alleinige aktiv genutzte Komponente möglich. Die Anwendung als Überblendschutz für optische Detektionssysteme ist ebenfalls möglich. Als steuerbares Filtersystem bei photographischen Prozessen ist das System ebenfalls geeignet.

### 5. Spiegel

Eine elektrochrome Vorrichtung kann auch als abblendbarer Spiegel, z. B. im Automobil als Außen- oder Rückspiegel eingesetzt werden, der durch Anlegen einer elektrischen Spannung abgedunkelt werden kann und somit das Blenden durch Scheinwerfer fremder Fahrzeuge verhindet wird (vgl. z. B. US-A 3 280 702, US-A 4 902 108, EP-A 0 435 689, US-A 5 140 455). Nachteilig bei Systemen nach dem Stand der Technik (Lösungsysteme) ist die Farbinhomogenität nach längerem Betrieb (Segregation), insbesondere bei Spiegeln großer Abmessungen (z.B. LKW-Spiegel). Eine Erhöhung der Viskosität des Lösungssystems durch Zugabe von polymeren Verdickern wird beschrieben (z. B. US-A 4 902 108).

### 6. EMI shielding

Eine elektrochrome Vorrichtung kann auch als variables Filterelement zur Modulation elektromagnetischer Strahlung in bestimmten Wellenlängenbereichen eingesetzt werden.

Elektrochrome Vorrichtungen bestehen normalerweise aus einem Paar Glas- oder Kunststoffscheiben, von denen im Falle eines Spiegels, eine verspiegelt ist. Eine Seite dieser Scheiben ist mit einer lichtdurchlässigen, elektrisch leitfähigen Schicht, z. B. Indium-Zinn-Oxid (ITO), beschichtet. Aus diesen Scheiben wird eine Zelle aufgebaut, indem sie mit ihrer einander zugewandten elektrisch leitfähig beschichteten Seite fixiert werden, wobei die Zelle zwischen den Scheiben das elektrochrome System enthält. Sie ist dicht verschlossen. Über die leitfähige Schicht lassen sich die beiden Scheiben getrennt elektrisch kontaktieren und ansteuern.

Bei den aus dem oben zitierten Stand der Technik bekannten elektrochromen Lösungs-Systemen sind solche Paare von Redoxsubstanzen in einem Lösungsmittel enthalten, die nach Reduktion bzw. Oxidation farbige positiv oder negativ geladene Radikale, bilden, die chemisch reaktiv sind. Beispiele hierfür sind die seit langem bekannten Viologensysteme.

Als Paar von Redoxsubstanzen wird hierbei je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

Aus US-A 4 902 108 ist bekannt, daß solche Paare von Redoxsubstanzen geeignet sind, bei denen die reduzierbare Substanz wenigstens zwei chemisch reversible Reduktionswellen im cyclischen Voltammogramm und die oxidierbare Substanz entsprechend wenigstens zwei chemisch reversible Oxidationswellen besitzt. Systeme dieser Art kommen hauptsächlich für abblendbare Autorückspiegel in Frage. Da es sich hierbei um Lösungssysteme handelt kommt eine Anwendung in elektrochromen Fenstern unter normalen Umständen nicht in Betracht.

Es sind auch Systeme bekannt, bei denen das eigentliche elektrochrome Redoxpaar in einer Polymermatrix dispergiert ist (s. z.B. WO-A 96/03475). Der unerwünschte Effekt der Segregation wird hierbei unterdrückt.

Kombinationen anorganischer elektrochromer Komponenten, wie z. B. WO₃ , NiO oder IrO₂ sind ebenfalls bekannt und kommen als Komponenten in einem elektrochromen Fenster in Betracht (s. z.B. US-A 5 657 149, Electronique International No. 276, 16 (1997)).

Diese anorganischen elektrochromen Komponenten lassen sich nur durch Aufdampfen, Aufsputtern oder durch Sol-Gel-Technik auf dem leitfähigen Substrat aufbringen. Dies führt dazu, daß Systeme dieser Art sehr teuer in der Herstellung werden. In dem Bestreben, eine anorganische Komponente durch eine organische Polymerkomponente zu ersetzen, sind z. B. elektrochrome Systeme auf Basis des elektrisch leitfähigen Polymers Polyanilin (PANI) und WO₃ als komplementäre elektrochrome Materialien bekannt geworden (s. z.B. B.P. Jelle, G. Hagen, J. Electrochem. Soc., Vol. 140, Non. 12, 3560 (1993)). Es wurde auch der Versuch unternommen, Systeme ohne eine anorganische Komponente einzusetzen, wobei die ITO oder SnO₂-Schicht (Gegenelektrode) als komplementäre elektrochrome Komponete zu substituierten Poly(3,4-alkylendioxythiophenen) dienen soll (US-A-5 187 608).

Es zeigt sich jedoch, daß derartige elektrochrome Anordnungen ungeeignet sind, um eine ausreichende Anzahl Schaltcyclen ohne Veränderung der Device-Eigenschaften zu gewährleisten.

Gegenstand der vorliegenden Erfindung ist eine elektrochrome Anordnung in einem Schichtaufbau, dadurch gekennzeichnet, daß eine Schicht ein elektrisch leitfähiges, elektrochromes Polydioxythiophen und eine weitere Schicht ein Ionenspeicher der Formel

LiMeO₃ (I)

ist, worin
- Me: für ein Metall der V. Nebengruppe des Periodensystems nach Mendelejew steht, bevorzugt für V, Nb und Ta.

Ganz besonders bevorzugt wird folgende Ionenspeicherschicht eingesetzt:
LiNbO₃.

Der Ionenspeicher kann auch eine Mischung der Verbindung (1) mit anderen Metalloxiden wie z.B.
Nickeloxide
TiO₂
CeO₂
V₂O₅
Nb₂O₅
Ta₂O₅
darstellen.

Der Ionenspeicher im erfindungsgemäßen Aufbau besteht somit aus einer Metalloxid-Verbindung oder einer Mischung aus Metalloxiden. Die Ionenspeicherschichten können bereits bei ihrer Erzeugung ein Li-Salz beinhalten oder auch erst nachträglich elektrochemisch mit Li-Ionen beladen werden.

Die Verbindungen der Formel (I) sind allgemein bekannte Verbindungen oder lassen sich nach allgemein bekannten Methoden der anorganischen Chemie herstellen wie z.B. beschrieben in N. Özer, C.M. Lampert, Solar Energy Materials and Solar Cells 39 (1995), 367 für das Beispiel LiNbO₃.

Die erfindungsgemäße elektrochrome Anordnung enthält also mindestens eine anorganische Ionenspeicherschicht. Diese kann entweder durch ein Sol-Gel-Verfahren, durch Aufdampfen/Aufsputtern oder elektrochemisch auf ein elektrisch leitfähiges Substrat aufgebracht werden, das zur Verbesserung der Leitfähigkeit mit einem Metallgitter versehen sein kann. Dabei kann es sich auch um Nano-Teilchen handeln, die mittels einer Gießtechnik aufgebracht werden können.

Die Polydioxythiophene sind kationisch geladen und aus Struktureinheiten der Formel (II) 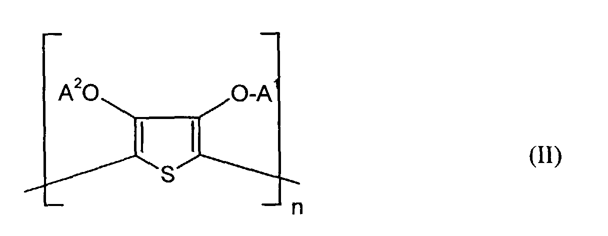 aufgebaut, in der
- A¹ und A²: unabhängig voneinander für gegebenenfalls substituiertes (C₁-C₄)-Alkyl stehen oder zusammen gegebenenfalls substituiertes (C₁-C₄)-Alkylen bilden, und
- n: für eine ganze Zahl von 2 bis 10.000 vorzugsweise 5 bis 5 000 steht,
in Gegenwart von Polyanionen.

Bevorzugte kationische Polydioxythiophene sind aus Struktureinheiten der Formel (IIa) oder (IIb) aufgebaut 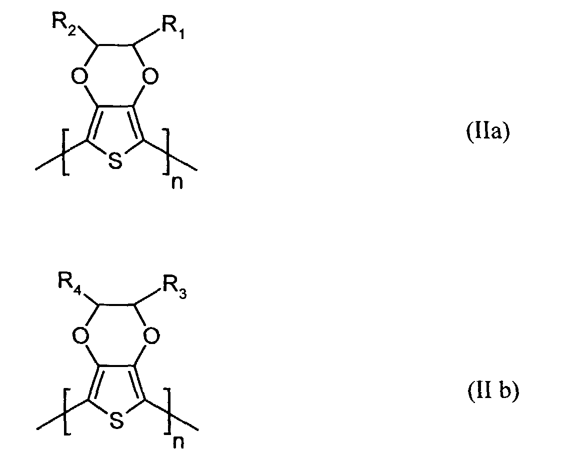 worin
- R₁ und R₂: unabhängig voneinander für Wasserstoff, gegebenenfalls substituiertes (C₁- C₁₈)-Alkyl, vorzugsweise (C₁-C₁₀)-, insbesondere (C₁-C₆)-Alkyl, (C₂-C₁₂)-Alkenyl, vorzugsweise (C₂-C₈)-Alkenyl, (C₃-C₇)-Cycloalkyl, vorzugsweise Cyclopentyl, Cyclohexyl, (C₇-C₁₅)-Aralkyl, vorzugsweise Phenyl-(C₁-C₄)-alkyl, (C₆-C₁₀)-Aryl, vorzugsweise Phenyl, Naphthyl, (C₁-C₁₈)-Alkyloxy, vorzugsweise (C₁-C₁₀)-Alkyloxy, beispielsweise Methoxy, Ethoxy, n- oder iso-Propoxy, oder (C₂-C₁₈)-Alkyloxyester steht und
- R₃, R: ₄ unabhängig voneinander für Wasserstoff, aber nicht beide gleichzeitig, mit mindestens einer Sulfonatgruppe substituiertes (C₁-C₁₈)-Alkyl, vorzugsweise (C₁-C₁₀)-, insbesondere (C₁-C₆)-Alkyl, (C₂-C₁₂)-Alkenyl, vorzugsweise (C₂-C₈)-Alkenyl, (C₃-C₇)-Cycloalkyl, vorzugsweise Cyclopentyl, Cyclohexyl, (C₇-C₁₅)-Aralkyl, vorzugweise Phenyl-(C₁-C₄)-alkyl, (C₆-C₁₀)-Aryl, vorzugweise Phenyl, Naphthyl, (C₁- C₁₈)-Alkyloxy, vorzugweise (C₁-C₁₀)-Alkyloxy, beispielsweise Methoxy, Ethoxy, n- oder iso-Propoxy oder (C₂-C₁₈)-Alkyloxyester steht.
- n: für eine Zahl von 2 bis 10 000, vorzugsweise 5 bis 5 000 steht.

Ganz besonders bevorzugt enthält der erfindungsgemäße elektrochrome Deviceaufbau mindestens ein elektrisch leitfähiges, elektrochromes kationisches oder neutrales Polydioxythiophen der Formeln (II a-1) und/oder (II b-1) 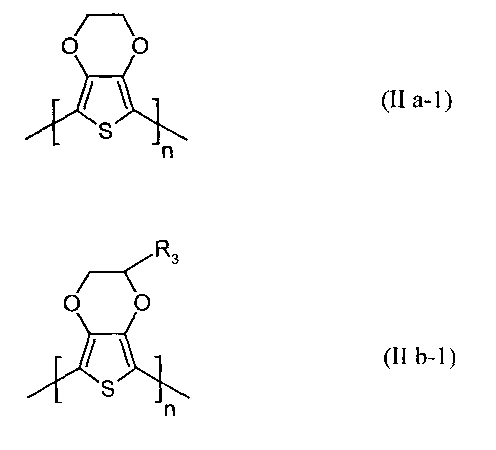 worin
- R₃: die obengenannte Bedeutung hat.
- n: für eine ganze Zahl von 2 bis 10 000, vorzugsweise 5 bis 5 000 steht.

Als Polyanionen dienen die Anionen von polymeren Carbonsäuren, wie Polyacrylsäuren, Polymethacrylsäuren, oder Polymaleinsäuren und polymeren Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol sein.

Besonders bevorzugt ist das Anion der Polystyrolsulfonsäure als Gegenion.

Das Molekulargewicht der die Polyanionen liefernden Polysäuren beträgt vorzugsweise 1000 bis 2 000 000, besonders bevorzugt 2000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Anstelle der für die Bildung der Dispersionen aus Polydioxythiophenen und Polyanionen erforderlichen freien Polysäuren, kann man auch Gemische aus Alkalisalzen der Polysäuren und entsprechenden Mengen an Monosäuren einsetzen.

Im Falle der Formel (IIb1) tragen die Polydioxythiophene positive und negative Ladung in der Struktureinheit. Die Herstellung der Polydioxythiophene ist beispielsweise in EP-A 0 440 957 (=US-A 5 300 575) beschrieben.

Die Polydioxythiophene werden durch oxidative Polymerisation erhalten. Dadurch erhalten sie positive Ladungen, die in den Formeln nicht dargestellt sind, da ihre Zahl und ihre Position nicht einwandfrei festellbar sind.

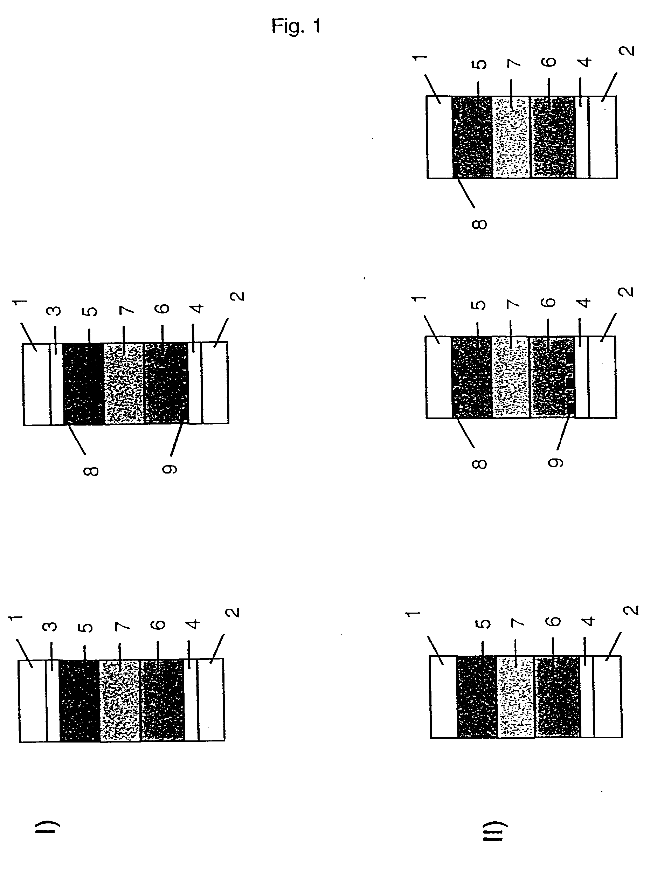

Die vorliegende Erfindung betrifft demnach einen elektrochromen Deviceaufbau mit elektrisch leitfähigen Poly(3,4-ethylendioxythiophen)-Derivaten als kathodisch einfärbenden elektrochromen Polymeren und dazu geeigneten Ionenspeicherschichten für Li-Ionen. Ein Gel-Elektrolyt, bestehend aus einem vernetzten oder unvernetzten Polymer, einem Li-Salz und einer bestimmten Menge eines Lösungsmittels befindet sich zwischen der elektrochromen Polymerschicht und der Ionenspeicherschicht. Der schematische Aufbau ist in Fig. 1, Prinzip I) dargestellt.

### Legende von Fig. 1:

- 1,2 :: Substrat
- 3,4 :: elektrisch leitfähige Beschichtung, wobei eine als Spiegel wirken kann
- 5 :: Elektrochromes Polymer z.B. PEDT/PSS
- 6 :: Ionenspeicherschicht
- 7 :: Gel-Elektrolyt (vernetzt oder unvernetzt)
- 8,9 :: feines Maschennetz aus Metall (optional)

Die elektrochrome Polymerschicht ist transparent im dotierten Zustand. Diese läßt sich durch Elektronenaufnahme (Reduktion) an der Kathode unter Zunahme der Extinktion im sichtbaren Bereich des Spektrum in eine gefärbte Form überführen. Die auf der gegenüberliegenden Seite (Anode) ablaufende Oxidation ist mit einer Austauschreaktion der Ionenspeicherschicht mit Li-Ionen verknüpft. Diese Reaktion trägt jedoch kaum zur Farbgebung bei, so daß sie nicht störend ins Gewicht fällt.

Die vorliegende Erfindung betrifft demnach also ein elektrochromes Festphasensystem, enthaltend mindestens ein redoxaktives elektrisch leitfähiges Polymer aus der Substanzklasse der Poly(3,4-ethylendioxythiophen)-Derivaten die zur Verarbeitbarkeit aus Lösung Polystyrolsulfonat beigemischt haben können, bzw. in einer Seitenkette eine lösungsvermittelnde Sulfonatgruppe tragen. Diese Polymerschicht wird bevorzugt aus wäßriger Lösung heraus aufgebracht, wobei nach Verdampfen des Lösungsmittels der feste, trockene Polymerfilm auf dem Substrat zurückbleibt. Sie soll jedoch auch durch Siebdruck aufzubringen sein. Als Substrate werden bevorzugt ein elektrisch leitfähiges, transparentes Glas- oder Foliensystem verwendet, wobei eine Schicht aus Indium-Zinn-Oxid (ITO), mit Fluor dotiertem Zinnoxid (FTO, K-Glas), undotiertem Zinnoxid oder eine Schicht aus feinverteiltem Silber als Elektrode dient. Es ist auch möglich, daß eine Elektrodenseite aus einer Metallschicht (wie z. B. Al, Cu, Pd) besteht die nicht mehr transparent ist (bei Anwendung im Spiegel). Der Gel-Elektrolyt enthält mindestens ein Polymer (z. B. Polyethylenoxid, PMMA), mindestens ein Li-Salz (z. B. Li-Triflat, Li-Perchlorat) sowie mindestens ein Lösungsmittel (z. B. Propylencarbonat).

Die vorliegende Erfindung betrifft neben der Verwendung als elektrochrome Vorrichtung in der Gebäude bzw. Architekturverglasung und als Fahrzeugverglasung oder Sonnendach auch die Verwendung als Anzeigeelement (Display), als elektrochromer Spiegel (z. B. selbstabblendbarer Automobilrückspiegel) auch die Verwendung in verschiedenen optischen Elementen.

Für eine Anwendung als Spiegel kann eine der beiden Elektroden aus einem aufgedampften oder elektrochemisch abgeschiedenen Metallbelag bestehen, z.B. Aluminium, Silber, Kupfer, Platin, Palladium, Rhodium.

Die vorliegende Erfindung betrifft weiterhin auch ein elektrochromes System, bei dem die farbgebende elektrochrome Polymerverbindung gleichzeitig als ihre eigene Elektrode fungiert, wodurch nur eine leitfähige Beschichtung aus ITO, Fluordotiertem Zinnoxid oder einem Metall nötig ist. (s. Fig.1,Prinzip II))

### Legende von Fig. 1, Prinzip II:

- 1,2 :: Substrat
- 4: : elektrisch leitfähige Beschichtung, die auch als Spiegel wirken kann
- 5 :: Elektrochromes Polymer
- 6 :: Ionenspeicherschicht
- 7 :: Gel-Elektrolyt (vernetzt oder unvernetzt)
- 8,9 :: feines Maschennetz aus Metall (optional)

Der erfindungsgemäße elektrochrome Aufbau zeichnet sich besonders bevorzugt dadurch aus, daß eine Kombination mit einem Wärmeschutzglas (käuflich für Architekturverglasungszwecke) explizit als positives Aufbau-Merkmal für Energiesparmaßnahmen von sonnendurchfluteten Räumen möglich ist. Weitere explizite Elektroden aus anderem Material sind somit nicht nötig, da die Wärmeschutzschicht den Durchlaß der IR-Strahlung begrenzt und gleichzeitig durch die elektrische Leitfähigkeit die Elektrodenfunktion in dem elektrochromen Aufbau übernimmt.

Der erfindungsgemäße elektrochrome Aufbau zeichnet sich außerdem dadurch aus, daß die elektrochrome Schicht auch noch IR-Strahlung in bestimmten Bereichen absorbieren kann und somit den Wärmedurchgang durch die Scheibe begrenzen kann.

Der erfindungsgemäße elektrochrome Schichtaufbau ist als Bestandteil einer elektrochromen Vorrichtung geeignet. In einer elektrochromen Vorrichtung dient der erfindungsgemäße elektrochrome Schichtaufbau als Medium mit variabler Transmission, d.h. unter Einfluß einer elektrischen Spannung ändert sich die Lichtdurchlässigkeit des Systems, indem sie von einem farblosen in einen gefärbten Zustand übergeht. Weiterer Gegenstand der vorliegenden Erfindung sind demnach elektrochrome Vorrichtungen enthaltend einen erfindungsgemäßen elektrochromen Device-Aufbau. Anwendungen dieser elektrochromen Vorrichtung bestehen in der Architekturverglasung und in Verkehrsmitteln z.B. als Fensterscheibe, Autosonnendach, Automobil-Rückspiegel, Display oder als optisches Element, bzw. als Bestandteil von Informationsanzeigeeinheiten wie Instrumentenanzeigen in Fahrzeugen jeglicher Art.

Im Falle, daß die elektrochrome Vorrichtung eine elektrochrome Anzeigevorrichtung ist, sind mindestens eine der beiden leitfähigen Schichten bzw. beide in elektrisch voneinander getrennte Segmente aufgeteilt, die einzeln kontaktiert sind.

Es kann aber auch nur eine der beiden Platten leitfähig beschichtet und in Segmente aufgeteilt sein. Die Trennung der Segmente kann beispielsweise erfolgen durch mechanisches Entfernen der leitfähigen Schicht, z.B. durch Ritzen, Kratzen, Schaben oder Fräsen oder auf chemischem Wege beispielsweise durch Ätzen mittels beispielsweise einer salzsauren Lösung von FeCl₂ und SnCl₂. Diese Entfernung der leitfähigen Schicht kann über Masken, z.B. solchen aus Photolack, örtlich gesteuert werden. Es können aber auch die elektrisch getrennten Segmente durch gezieltes, z.B. mittels Masken, Aufbringen, z.B. Sputtern oder Drucken, der leitfähigen Schicht hergestellt werden. Die Kontaktierung der Segmente erfolgt beispielsweise mittels feiner Streifen aus leitfähigem Material, womit das Segment mit einem Kontakt am Rande der elektrochromen Vorrichtung elektrisch leitend verbunden ist. Diese feinen Kontaktstreifen können entweder aus dem gleichen Material bestehen, wie die leitfähige Schicht selbst und beispielsweise bei deren Aufteilung in Segmente, wie oben beschrieben, mit hergestellt werden. Sie können aber auch z.B. zur Verbesserung der Leitfähigkeit aus anderem Material wie feinen metallischen Leitern, beispielsweise aus Kupfer oder Silber, bestehen. Auch eine Kombination aus metallischem Material und dem Material der leitfähigen Beschichtung ist möglich. Diese metallischen Leiter können beispielsweise entweder in feiner Drahtform aufgebracht, z.B. aufgeklebt, werden oder aber aufgedruckt werden. Alle diese oben beschriebenen Techniken sind im allgemeinen aus der Herstellung von Flüssigkristalldisplays (LCD) bekannt.

Im Falle von Displays können die erfindungsgemäßen Anzeigen im Durchlicht oder auch reflektiv über eine Verspiegelung betracht werden.

Im Falle, daß die elektrochrome Vorrichtung ein elektrochromes Fenster ist, kann auf einer oder beiden Elektroden ein feines Maschennetz aus Metall aufgedampft sein. Dies dient der Verbesserung der Oberflächenleitfähigkeit der Substrate und ist bei großen Flächen von Vorteil, um eine gleichmäßige Einfärbung zu erzielen.

Der erfindungsgemäße elektrochrome Device-Aufbau enthält bevorzugt mindestens eine transparente elektrisch leitfähige Beschichtung auf einem Substrat (Glas oder Kunststoff), bestehend aus Indium-Zinn-Oxid (In₂O₃ : SnO₂ (ITO)), Zinnoxid (SnO₂), Fluor-dotiertes Zinnoxid (SnO₂ : F; FTO oder "K-Glas", "Wärmeschutzglas"), Antimon-dotiertes Zinnoxid,Antimon-dotiertes Zinkoxid, Aluminium-dotiertes Zinkoxid oder einem transparenter Metallfilm mit genügend dünner Schichtdicke, z.B. Silberbeschichtung (Wärmeschutzglas, z.B. ®PLANITHERM).

Auch andere leitfähige Polymere wie gegebenenfalls substituierte Polythienyle, Polypyrrole, Polyaniline, Polyactetylen oder Polythiophene können verwendet werden.

Im erfindungsgemäßen Device-Aufbau ist das eigentliche elektrochrome Polymer auch bevorzugt auch als sein eigenes leitfähiges Elektrodenmaterial anstelle einer der oben genannten leitfähigen Beschichtungen einzusetzen.

Ganz besonders bevorzugt werden Indium-Zinn-Oxid (In₂O₃ : SnO₂ (ITO)), Zinnoxid (SnO₂), Fluor-dotiertes Zinnoxid (SnO₂ : F; FTO, "K-Glas", "Wärmeschutzglas") oder ein transparenter Silberbelag mit genügend dünner Schichtdicke (Wärmeschutzglas) verwendet.

Im Falle, daß eine der Scheiben verspiegelt ist, kann auch diese leitfähige Schicht genutzt werden. Besonders bevorzugt wird hier Silber, Aluminium, Kupfer, Platin, Palladium und Rhodium eingesetzt.

Der erfindungsgemäße elektrochrome Aufbau enthält bevorzugt einen transparenten Gel-Elektrolyten, der aus folgenden Komponenten besteht:
Polymer (vernetzt oder unvernetzt)
Li-Salz
Lösungsmittel oder Lösungsmittelgemisch

Als bevorzugte Polymere kommen hierbei Polymethylmethacrylat (PMMA), Polyethylenoxid (PEO), Polyacrylnitril (PAN), Poly(N,N-dimethylacrylamid), Poly(2-(2-methoxyethoxy)-ethoxy)phosphazen, Poly(oxymethylen-oligo(oxyethylen)), Polyethylenglycole (PEG), Polypropylenglycole (PPG) oder Polymere auf Basis von Polyepichlorhydrin oder Polyether sowie Mischungen in Frage. Außerdem Copolymere wie Ethylenoxid-propylenoxid-(EO/PO)-Copolymer oder oxymethylen-verbrückte Polyethylenoxide.

Besonders bevorzugt werden Polyether und Polyethylenoxide verwendet.

Besonders bevorzugt sind auch photovernetzbare Polymersysteme auf Basis von Acrylaten wie z.B. Polyethylenglycol 400 Diacrylat, Polyethylenglykol 400 Dimethacrylat, Polyethylenglykol 600 Diacrylat, Polyethylenglykol 600 Dimethacrylat, Polyethylenglykol-methacrylat, Tripropylenglykol-diacrylat, Tripropylenglykol-monomethylether-acrylat, Trimethylolpropan-triacrylat, Ethylenglykol-dimetharcylat, Hydroxyethyl-methacrylat (HEMA), Hexandiol-diacrylat, Dianol-diacrylat, Tetraethylenglykol-diacrylat, Pentaerythritol-triacrylat, Pentaerythritol-tetraacrylat, Butyl-methacrylat sowie die Acrylate Roskydal® UA VP LS 2258 oder Roskydal® UA V 94/800 der Fa. Bayer AG sowie deren Acrylat-Vorstufen. Die photovernetzbaren Polymersysteme sollen in Gegenwart des verwendeten Lösungsmittels und des Li-Salzes mit Hilfe einer Lichtaktivierung mittels eines gängigen Photoinitiators wie z.B. ®Darocure 1173, 1116 oder ®Irgacure 184 (Fa. E. Merck KGaA, Darmstadt) auch zwischen dicken Glasplatten, die mit einer transparenten elektrischen Beschichtung versehen sind, noch auszuhärten sein. Die Belichtung erfolgt nach Befüllung der Zelle durch Bestrahlen mit einer geeigneten Lampe (z.B. UV-Strahler wie Hg- oder Xe-Lampe). Die Aushärtung von Polymersystemen durch Elektronenstrahlaushärtung ist bei den genannten Systemen ebenfalls möglich.

Ganz besonders bevorzugt sind auch Polymersysteme, die thermisch und katalytisch über Isocyanatgruppen mit OH-funktionellen Polyetherverbindungen, wie z. B. Polyetherpolyolen vernetzt werden können und Polyurethane bilden. Außerdem Polyurethane mit verschiedenen Weichsegmenten wie z. B. Polytetramethylenglycol oder Polypropylenglycol.

Ganz besonders bevorzugt sind auch modifizierte Siloxane aus z.B. gamma-Glycidylpropyltrimethoxysilan. Dabei kann es sich z. B. um Polypropylenoxid-modifizierte Varianten handeln.

Die Gel-Elektrolyten können auch organische und/oder anorganische Füllstoffe oder Zusätze enthalten. Hier können die üblichen Additive wie z.B. Thermostabilisatoren, optische Aufheller, Flammschutzmittel, Fließhilfsmittel, Brandschutzmittel, Farbmittel, Pigmente, Füll- oder Verstärkungsstoffe, fein zerteilte Mineralien, Faserstoffe, Kreide, Quarzmehl, Glas, Aluminiumoxid, Aluminiumchlorid und Kohlenstoffasern in üblichen Mengen zugesetzt sein. Die Funktion eines Abstandshalter kann z.B. von Glaskugeln, Polymerpartikeln, Kieselgel oder Sandkörnern mit definierter Größe übernommen werden, falls dies notwendig ist.

Als bevorzugte Li-Salze kommen LiClO₄, LiCF₃SO₃, LiN(SO₂CF₃)₂, LiCl, LiPF₆ in Frage.

Ganz besonders bevorzugt sind hierbei LiClO₄, LiCF₃SO₃ und LiN(SO₂CF₃)₂.

Als besonders bevorzugte Lösungsmittel kommen Propylencarbonat, Ethylencarbonat, Acetonitril und γ-Butyrolacton sowie Mischungen daraus in Frage.

Ganz besonders bevorzugt werden Propylencarbonat und Ethylencarbonat verwendet.

Als Substrat werden im erfindungsgemäßen elektrochromen Aufbau Glas oder verschiedene Sorten Kunststoff eingesetzt.

Bevorzugt sind im allgemeinen transparente Substrate jeglicher Art.

Als besonders bevorzugte Materialien neben Glas, speziell Wärmeschutzglas bei Anwendung als elektrochromes Fenster, (in Schichtdicken von 10 µm bei 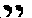 flexiblem Glas, Dünnglas" bis 3 cm) kommen Polyester (z.B. Polyethylenterephthalat (PET) oder Polyethylennaphthalat (PEN)), verschiedene Typen von Polycarbonat (z.B. ®Makrolon, APEC-HT), Polysulfone, Polyimide sowie Polycycloolefine in Frage. Das polymere Substrat kann dabei als flexible Folie oder als dicke Platte zum Einsatz kommen. Das Substat kann auch gekrümmt vorliegen, so daß sich der Schichtaufbau der Form der Unterlage anpaßt. Ein flexibles Kunststoffsubstrat kann nach dem Aufbau des elektrochromen Gesamtsystems auch auf verschiedene Unterlagen, wie z.B. gekrümmtes Glas, auflaminiert oder aufgeklebt werden.

Die Kunsstoffsubstrate können zusätzlich noch mit Sperrschichten gegen Wasser und Sauerstoff versehen sein.

Bevorzugt kommen hier TiOₓ, SiOₓ auf Polyester, z.B. Polyethylenterephthalat, Du Pont, (vgl. Verpackungsfolien) oder fluorierte Polymere sowie mögliche Kombinationen daraus sowie auch Sperrschichten auf Basis von anorganisch-organischen Hybridsystemen in Frage.

Der erfindungsgemäße elektrochrome Aufbau kann bei der Gestaltung als flexibles Foliensystem als komplettes elektrochromes Verbundsystem auf die Sicherheitsscheiben von Autos auflaminiert oder geklebt werden. Außerdem kann er in den Hohlraum eines Verbundglasscheibensystems in die Architekturverglasung integriert werden.

Der Steuermechanismus des elektrochromen Aufbaus beruht auf der reversiblen elektrochemischen Dotierung des elektrochromen Polymers, was sich in kräftigen

Farbänderungen beispielsweise von farblos zu blau äußert. Der Aufbau wird mit definierten Spannungen angesteuert.

Die Reduktions- und Oxidationsprozesse in dem erfindungsgemäßen elektrochromen Aufbau erfolgen im allgemeinen durch Elektronenaufnahme bzw. -abgabe an der Kathode bzw. Anode, wobei zwischen den Elektroden vorzugsweise eine Potentialdifferenz von 0,1 bis 5 V, ganz besonders bevorzugt 0,1 bis 3 V herrscht. Nach Abschalten des elektrischen Potentials kann die vorher erzielte Einfärbung eine längere Zeit aufrecht erhalten werden (Memory-Effekt), so daß man mit minimalen Energieverbrauch eine permanente Einfärbung erzielen kann. Durch kurzzeitiges Umpolen kann spontan ein Ladungsausgleich und damit Entfärbung erreicht werden.

Der erfindungsgemäße elektrochrome Aufbau ist auch bei größeren Flächen dadurch gekennzeichnet, daß eine Versorgung mittels Solarmodule möglich ist.

Außerdem wurde gefunden, daß der elektrochrome Polymerfilm nicht erst in-situ auf dem elektrisch leitfähigen Substrat erzeugt werden muß, sondern aus ökologisch unbedenklicher wäßriger Lösung heraus durch eine Gießtechnik, durch Spincoating/Dipcoating, durch Siebdruck oder durch Sprühen aufgebracht werden kann. Diese Methode eignet sich besonders für großflächige Systeme.

Zur besseren Benetzung der Substrate kann auch ein Benetzungsmittel (z.B. Fluortensid) zugesetzt werden.

### Beispiele:

### Beispiel 1

### Aufbringen eines elektrochromen Polymers auf ein ITO-Substrat

Das Polymer Baytron® P (wäßrige Dispersion des leitfähigen Polymers PEDT/PSS, Polyethylendioxythiophen-polystryrolsulfonat der Fa. Bayer AG) 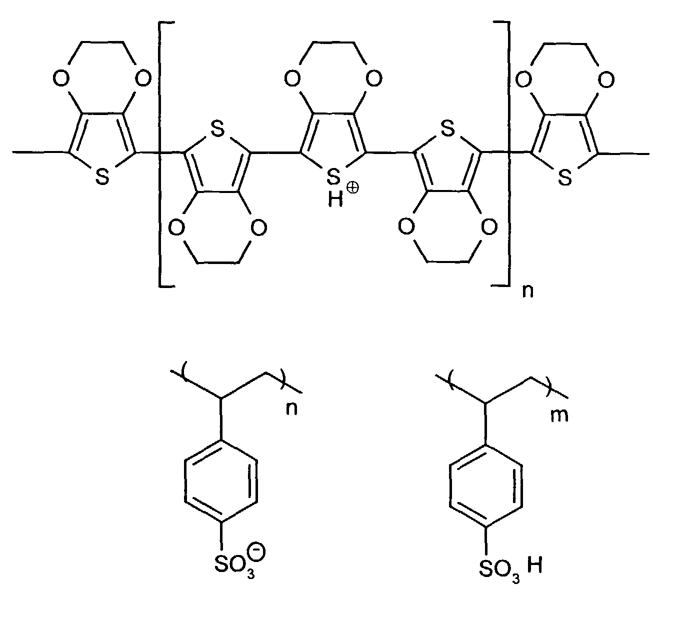 wird aus wäßriger Lösung, die noch Isopropanol enthält, mit einer Lackschleuder 4 mal mit je 15 Sekunden bei einer Umdrehungsgeschwindigkeit von 1500 U/min. auf die elektrisch leitfähige Seite einer ITO-Glasscheibe (Fa. Merk-Balzers, Lichtenstein, Oberflächenwiderstand <15 Ω/sq) aufgebracht. Während dem Aufbringen wird mittels eines Föns das Lösungsmittel abgedampft

Man erhält einen durchsichtigen, nur ganz leicht bläulich gefärbten Polymerfilm. Eine Messung der Schichtdicke mit einem Profilometer ergab einen Wert von 0,6 µm.

### Beispiel 2

### Aufbringen von Baytron® P auf K-Glas

Baytron® P (wie unter Beispiel 1) wird aus wäßriger Lösung heraus mit einer Lackschleuder 4 mal mit je 15 Sekunden bei einer Umdrehungsgeschwindigkeit von 1500 U/min. auf die elektrisch leitfähige Seite einer K-Glas-Scheibe (Wärmeschutzscheibe der Fa. Flachglas, Oberflächenwiderstand ∼ 20 Ω/sq) aufgebracht. Während dem Aufbringen wird mittels eines Föns das Lösungsmittel abgedampft.

Man erhält einen durchsichtigen, nur ganz leicht bläulich gefärbten Polymerfilm. Eine Messung der Schichtdicke ergab einen Wert von 0,6 µm.

### Beispiel 3

### Aufbringen einer Ionenspeicherschicht aus Lithiumniobat auf K-Glas

Es werden 1,5 g Niob-V-ethoxid und 0,259 g Lithiumethoxid in jeweils 10 ml trockenem Ethanol gelöst. Diese beiden jeweils 0,5 molaren Lösungen werden 1 Stunde bei Raumtemperatur gerührt, bevor sie vereinigt werden. Anschließend rührt man die erhaltene Mischung für weitere 1,5 Stunden bei Raumtemperatur nach.

Die so erhaltene Sol-Lösung wird auf die leitfähige Seite von K-Glasscheiben aufgecoatet (10 sec. bei 1500 U/min). Anschließend werden die Schichten 2 Stunden lang bei 300°C getempert. Die erhaltenen Schichten sind als Ionenspeicherschicht zu verwenden.

### Beispiel 4

### Herstellung eines Gel-Elektrolyten 1

Man erzeugt folgende Mischung:
7,0 g Acetonitril
2,0 g Propylencarbonat (trocken)
0,7 g PMMA (M_{w} ca. 15.000)
0,3 g CF₃SO₃Li (Fa. Aldrich)

Nachdem alles gelöst ist, wird die Lösung einmal filtriert und ist gebrauchsfertig.

### Beispiel 5

### Herstellung eines Gel-Elektrolyten 2

Vorgehensweise wie unter Beispiel 4 jedoch mit folgenden Einwaagen:
7,0 g Acetonitril
2,0 g Propylencarbonat
0,7 g Polyethylenoxid (PEO; M_{w} ca. 200.000)
0,3 g CF₃SO₃Li (Fa. Aldrich)

### Beispiel 6

### Herstellung eines Gel-Elektrolyten 3

7,7 g des ungesättigten aliphatischen Urethanacrylats Roskydal® UA VP LS 2258 (Fa. Bayer AG) wird zusammen mit 0,1925 g (2,5 Gew.-%) Photoinitiator Darocure 1173 der Fa. Merck, Darmstadt und 0,3 g (3 Gew.-%) Lithium-Trifluormethansulfonat der Fa. Aldrich in 2 g trockenem 1,2-Propylencarbonat der Fa. Aldrich vermischt. Diese Abmischung ist gießfähig und kann photochemisch vernetzt werden, wodurch ein nicht mehr fließfähiger Gel-Elektrolyt hergestellt werden kann.

### Beispiel 7

### Herstellung einer Gel-Elektrolytschicht; Bau der erfindungsgemäßen elektrochromen Zelle 1

Der noch unvernetzte Gel-Elektrolyt 3 aus Beispiel 6 wird auf die Ionenspeicherschicht aus Beispiel 3 mit einer Naßfilmdicke von 200 µm aufgebracht und mit einer elektrochromen Schicht aus Beispiel 2 in Kontakt gebracht. Dieser Verbund wird mit einer Bandlaufgeschwindigkeit von 20 m/min unter einem UV-Stahler (IST-Strahler) hinwegbefördert. Dadurch wird der Gel-Elektrolyt vernetzt. Man erhält Systeme die einen nicht mehr fließenden Gel-Elektrolyten enthalten und transparent sind.

### Beispiel 8 (Vergleich: ohne Ionenspeicherschicht)

### Fertigstellung einer kompletten elektrochromen Zelle 2 und 3

Auf die leitfähige Seite von ITO-Gläser werden Gel-Elektrolyten 1 und 2 aus den Beispielen 4 und 5 gleichmäßig aufgebracht und mit den mit Baytron P-beschichteten Seiten von Glas-Substraten aus Beispiel 1 in Kontakt gebracht. Man erhält jeweils einen elektrochromen Schichtaufbau, der in Beispiel 9 charakterisiert wird.

### Beispiel 9

### Zyklenstabilitäts-Test an den elektrochromen Zellen 2 und 3

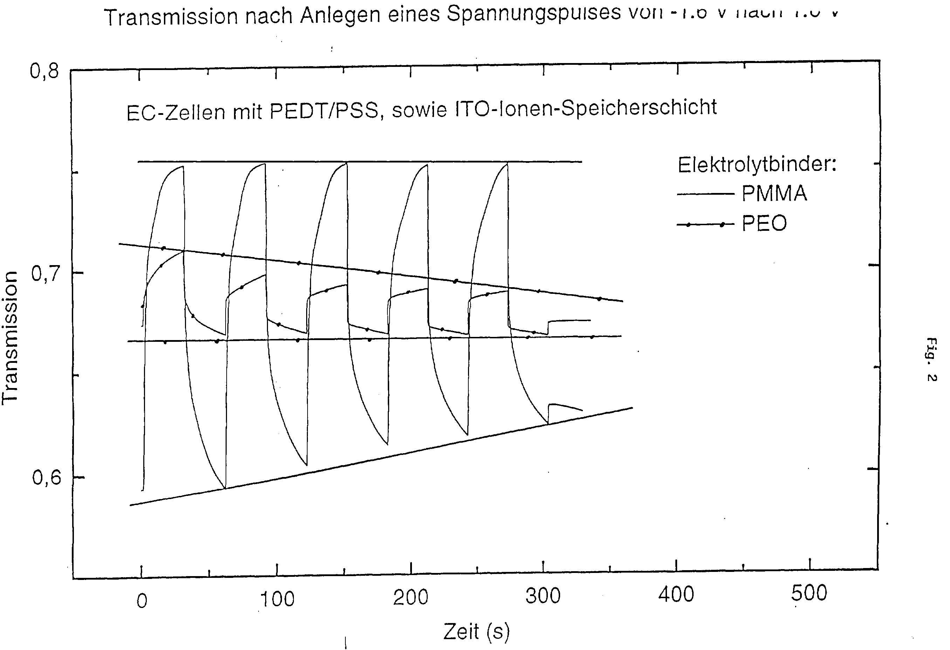

Die elektrochromen Vergleichszellen 2 und 3 aus Beispiel 8 werden jeweils an den ITO-Schichten mit 1,6 V Gleichspannung kurze Zeit kontaktiert, bevor man dann die Polarität der elektrischen Ansteuerung ändert. Man erreicht dadurch ein zyklenmäßiges Ein- und Entfärben der Zelle. Dabei beobachtet man gleichzeitig die zeitliche Änderung der Transmission durch die Zelle. Man stellt dabei fest, daß Anordnungen ohne weitere Ionenspeicherschicht keine Zyklenstabilität aufweisen (siehe hierzu Fig. 2). Dies soll durch die vorliegende Erfindung verbessert werden, was in Beispiel 10 demonstriert wird.

### Beispiel 10

### Zyklenstabilitäts-Test an der elektrochromen Zelle 1

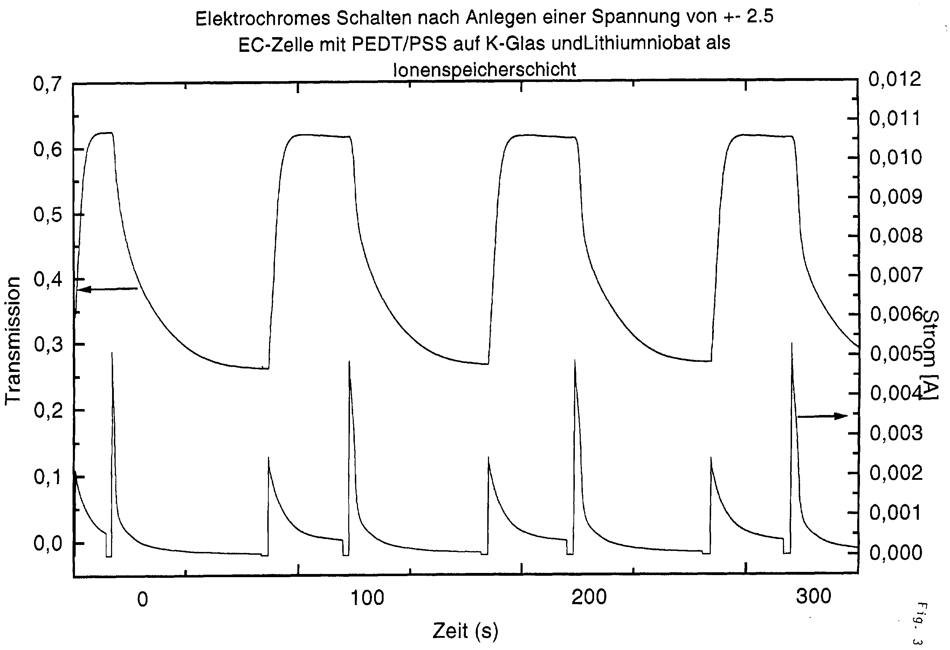

Die elektrochrome Zelle 1 aus Beispiel 7 wird jeweils an den leitfähigen Schichten der beschichteten K-Gläser aus Beispiel 2 und 3 mit 2,5 V Gleichspannung kurze Zeit kontaktiert, bevor man dann die Polarität der elektrischen Ansteuerung ändert. Man erreicht dadurch ein zyklenmäßiges Ein- und Entfärben der Zelle. Dabei beobachtet man gleichzeitig die zeitliche Änderung der Transmission durch die Zelle. Man stellt dabei fest, daß Anordnungen mit der Lithiumniobat-Ionenspeicherschicht eine deutliche Verbesserung der Zyklenstabilität gegenüber bisherigen Anordnungen (siehe Beispiel 8 und 9) aufweisen (vergleiche hierzu Fig. 3). Auch nach relativ hoher Anzahl an Ein- und Ausschaltzyklen stellt man fast keine Veränderung der Eigenschaften der elektrochromen Anordnung fest.

## Patentansprüche

1. Elektrochrome Anordnungen, in einem Schichtaufbau, dadurch gekennzeichnet, daß eine Schicht ein elektrisch leitfähiges, elektrochromes Polydioxythiophen und eine weitere Schicht ein Ionenspeicher der Formel
LiMeO₃
ist, worin
Me für ein Metall der V. Nebengruppe des Periodensystems nach Mendelejew steht.

2. Elektrochrome Anordnungen, gemäß Anspruch 1, wobei
Me für Nb steht.

3. Elektrochrome Anordnungen gemäß Anspruch 1 und 2, wobei die folgenden Verbindungen oder eine Mischung von mindestens zwei Verbindungen als Ionenspeicher fungieren:
LiNbO₃, LiVO₃, LiTaO₃.

4. Elektrochrome Anordnungen, gemäß Anspruch 1 bis 3, wobei folgende weitere Verbindungen in einer Ionenspeicherschicht enthalten sein können:
TiO₂
CeO₂
V₂O₅
Nb₂O₅
Nickeloxide.

5. Elektrochrome Anordnungen, gemäß Anspruch 1, wobei kationische oder neutrale Polydioxythiophene aus Struktureinheiten der Formel (II) 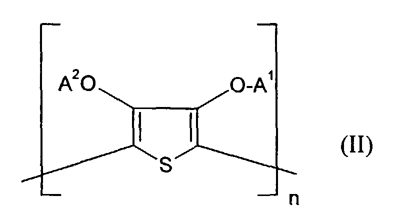 aufgebaut sind, in der
A¹ und A² unabhängig voneinander für gegebenenfalls substituiertes (C₁-C₄)-Alkyl stehen oder zusammen gegebenenfalls substituiertes (C₁-C₄)-Alkylen bilden, und
n für eine ganze Zahl von 2 bis 10.000 steht,
und die Gegenionen Polyanionen sind.

6. Elektrochrome Anordnungen, gemäß Anspruch 5, wobei die kationischen oder neutralen Polydioxythiophene aus Struktureinheiten der Formel (IIa) oder (IIb) aufgebaut sind 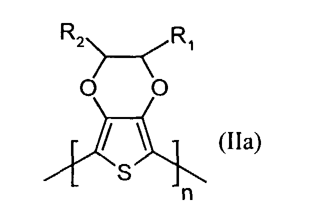 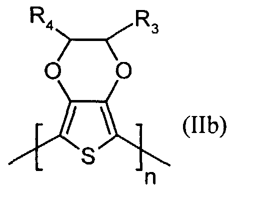 worin
R₁ und R₂ unabhängig voneinander für Wasserstoff, gegebenenfalls substituiertes (C₁-C₁₈)-Alkyl, (C₂-C₁₂)-Alkenyl, (C₃-C₇)-Cycloalkyl, (C₇-C₁₅)-Aralkyl, (C₆-C₁₀)-Aryl, (C₁-C₁₈)-Alkyloxy oder (C₂-C₁₈)-Alkyloxyester steht und
R₃, R₄ unabhängig voneinander für Wasserstoff, aber nicht beide gleichzeitig, mit mindestens einer Sulfonatgruppe substituiertes (C₁-C₁₈)-Alkyl, (C₂-C₁₂)-Alkenyl, (C₃- C₇)-Cycloalkyl, (C₇-C₁₅)-Aralkyl, (C₆-C₁₀)-Aryl, (C₁-C₁₈)-Alkyloxy oder (C₂-C₁₈)-Alkyloxyester steht,
n für eine Zahl von 2 bis 10 000 steht.

7. Elektrochrome Anordnungen, gemäß Anspruch 6, enthaltend kationisches oder neutrales Polydioxythiophen der Formel (II a-1) oder (II b-1) 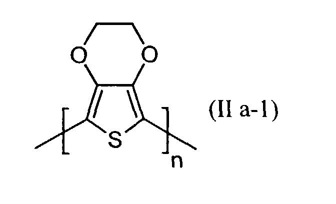 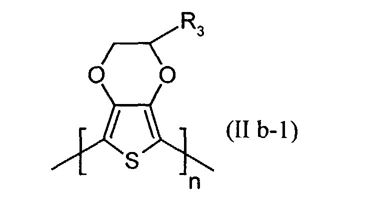 worin
R₃ und n die in Anspruch 5 genannte Bedeutung hat.

8. Elektrochrome Anordnungen, gemäß Anspruch 6 und 7, wobei die Polyanionen Anionen von polymeren Carbonsäuren, und/oder polymeren Sulfonsäuren sind.

9. Elektrochrome Anordnungen, gemäß Anspruch 1 bis 8, dadurch gekennzeichnet, daß die elektrochrome Anordnungen mindestens eine transparente elektrisch leitfähige Beschichtung auf einem Substrat aufgebracht enthält.

10. Elektrochrome Anordnungen, gemäß Anspruch 1 bis 8, wobei das leitfähige Elektrodenmaterial ein elektrisch leitfähiges Polydioxythiophen ist.

11. Elektrochrome Anordnungen, gemäß Anspruch 1 bis 8, wobei eine mit einem Metall verspiegelte Scheibe (Substrat) als leitfähige Schicht zur Kontaktierung genutzt wird.

12. Elektrochrome Anordnungen, gemäß Anspruch 1 bis 11, dadurch gekennzeichnet, daß der erfindungsgemäße elektrochrome Aufbau einen transparenten Gel-Elektrolyten enthält, der folgende Komponenten enthält:
Polymer (vernetzt oder unvernetzt)
Li-Salz
Lösungsmittel oder Lösungsmittelgemisch.

13. Elektrochrome Anordnungen, gemäß Anspruch 1 bis 12, wobei photovernetzbare Polymere eingesetzt werden.

14. Elektrochrome Anordnungen, gemäß Anspruch 12 und 13, dadurch gekennzeichnet, daß die Gel-Elektrolyten auch organische und/oder anorganische Füllstoffe und/oder Additive enthalten.
